# FASCICULE DE BREVET EUROPEEN

(11) **EP 3 667 126 B1**
(45) Date de publication et mention de la délivrance du brevet: **06.09.2023**
(21) Numéro de dépôt: 19213637.2
(22) Date de dépôt: 04.12.2019
(51) Int. Cl.: F16H 57/08, F16H 57/04

(54) **PORTE-SATELLITES POUR UN REDUCTEUR DE VITESSE DU TYPE PLANETAIRE**
SATELLITENTRÄGER FÜR EIN PLANETENGETRIEBE
SATELLITE CARRIER FOR A PLANETARY REDUCER

(30) Priorité: 13.12.2018 FR 1872867
(43) Date de publication de la demande: 17.06.2020
(73) Titulaire: Safran Transmission Systems, 92700 Colombes (FR)
(72) Inventeur: DI GIOVANNI, Jean-Charles, Michel, Pierre, 77550 MOISSY-CRAMAYEL (FR)
(74) Mandataire: Gevers & Orès

(56) Documents cités:
- EP-A1- 1 464 869
- EP-A1- 2 360 047
- EP-A1- 2 940 347
- EP-A1- 3 236 111
- EP-A1- 3 489 550
- WO-A1-2018/083410
- WO-A1-2019/130006
- US-B1- 8 529 197

## Description

La présente invention concerne le domaine des réducteurs mécaniques pour des turbomachines en particulier d'aéronef.

### Arrière-plan technique

L'état de l'art comprend notamment les documents WO-A1-2010/092263, FR-A1-2 987 416, EP -A1 -2 940 347, EP-A1-3 236 111, EP-A1-2 360 047, WO-A1-2018/083410, EP-A1-3 489 550, WO-A1-2019/130006 et FR-A1-3 041 054.

Le rôle d'un réducteur mécanique est de modifier le rapport de vitesse et de couple entre l'axe d'entrée et l'axe de sortie d'un système mécanique.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différents équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites.

Les réducteurs peuvent être composés de un ou plusieurs étages d'engrènement. Cet engrènement est assuré de différentes façons comme par contact, par friction ou encore par champs magnétique. Il existe plusieurs types d'engrènement par contact comme avec des dentures droites ou en chevron.

Le porte-satellites d'un réducteur peut se présenter sous la forme d'une cage dans laquelle sont logés le solaire, les satellites, les paliers de guidage des satellites ainsi que des moyens de lubrification des satellites et du solaire. Le solaire comprend des cannelures internes d'accouplement à un premier arbre de la turbomachine et le porte-satellites ou le porte-couronne est accouplé à un autre arbre.

Le porte-satellites peut être monobloc. Dans ce cas, sa cage est reliée à un porte-cage par une liaison rigide. En variante, on peut envisager une technologie dans laquelle la cage est reliée au porte-cage par des liaisons souples, telles que décrites dans le document EP-A1-1 464 869. Bien que ce montage soit compliqué de par son hyperstatisme et que l'ensemble soit lourd et couteux, il tolère un certain désalignement des satellites par rapport au solaire et à la couronne.

Comme évoqué dans ce qui précède, un réducteur planétaire a un porte-satellites fixe et relié à un élément de stator de la turbomachine par l'intermédiaire d'une pièce de souplesse afin de permettre le réalignement du réducteur avec le premier arbre. Dans le cas d'un porte-satellites monobloc, ce dernier n'est en général pas configuré et optimisé pour faciliter l'intégration des circuits de lubrification du réducteur, et leur alimentation.

La présente invention propose un perfectionnement qui apporte une solution simple, efficace et économique à ce problème.

### Résumé de l'invention

L'invention propose à cet effet un porte-satellites tel que définit dans la revendication 1.

La solution proposée est particulièrement conçue pour un réducteur planétaire, c'est-à-dire à porte-satellites fixe (et donc à couronne mobile), ce porte-satellites étant ici monobloc. Cette solution est compatible de tout type de denture (droite, chevron). Enfin, la solution est compatible de tout type de paliers satellites, qu'ils soient composés d'éléments roulants (roulements à billes, à rouleaux, à rouleaux coniques, etc.), de paliers hydrodynamiques, etc.

Le porte-satellites selon l'invention peut comprendre une ou plusieurs des caractéristiques suivantes, prises isolément les unes des autres, ou en combinaison les unes avec les autres, si cela est permit par les revendications ci-jointes :
- les premiers pontets ont une forme générale en X et les seconds pontets s'étendent dans la continuité des premiers pontets ;
- l'anneau de fixation a un diamètre externe identique ou proche de celui des paroi radiales ;
- l'anneau de fixation comprend une face radiale sur laquelle débouche une série de moyens de fixation comme des orifices taraudés par exemple;
- certains desdits seconds espaces sont alignés axialement avec lesdits premiers espaces et ont chacun une forme générale allongée en direction circonférentielle autour de l'axe X ;
- ledit anneau de fixation est écarté axialement de ladite cage ;
- le porte-satellites comprend des déflecteurs d'huile situés entre les satellites, ces déflecteurs étant rapportés dans la cage du porte-satellites ou formés d'une seule pièce avec cette cage.

La présente invention concerne encore un ensemble comportant un porte-satellites tel que décrit ci-dessus, et au moins l'un des organes suivants :
- un distributeur d'huile de lubrification, ce distributeur ayant une forme générale annulaire autour de l'axe X et étant monté sur le porte-satellites à l'intérieur dudit anneau, ce distributeur comportant au moins un circuit d'huile comportant une entrée d'huile reliée à un tuyau d'alimentation s'étendant en direction radiale et traversant l'un desdits seconds espaces, et
- un organe élastiquement déformable, cet organe ayant une forme générale annulaire autour de l'axe X et comportant une extrémité axiale fixée audit anneau.

Avantageusement, le distributeur comprend deux circuits d'huile indépendants, un premier circuit d'huile comportant une première entrée d'huile reliée par un premier tuyau d'alimentation traversant l'un desdits seconds espaces, et un second circuit d'huile comportant une seconde entrée d'huile reliée par un second tuyau d'alimentation traversant un autre desdits seconds espaces.

Dans un mode préféré de réalisation de l'invention, le premier tuyau traverse un second espace de forme générale triangulaire ou trapézoïdale et le second tuyau traverse un second espace de forme allongée en direction circonférentielle.

L'invention concerne encore un réducteur de vitesse, en particulier pour une turbomachine d'aéronef, comportant un porte-satellites ou un ensemble tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en coupe axiale d'une turbomachine utilisant l'invention,
[Fig.2] la figure 2 est une section axiale en vue partielle d'un réducteur mécanique,
[Fig.3] la figure 3 est une vue en coupe axiale d'un réducteur mécanique selon l'invention,
[Fig.4] la figure 4 est une vue en perspective du réducteur de la figure 3, vu de l'arrière,
[Fig.5] la figure 5 est une vue en perspective d'un distributeur d'huile de lubrification du réducteur de la figure 3,
[Fig.6] la figure 6 est une vue en coupe d'un détail du réducteur de la figure 3 et montre une entrée d'huile du distributeur de la figure 5,
[Fig.7] la figure 7 est une vue en coupe d'un autre détail du réducteur de la figure 3 et montre une autre entrée d'huile du distributeur de la figure 5, [Fig.8] la figure 8 est une vue en perspective du porte-satellites du réducteur de la figure 3, vu de l'avant, les satellites et le solaire du réducteur étant présents dans le porte-satellites,

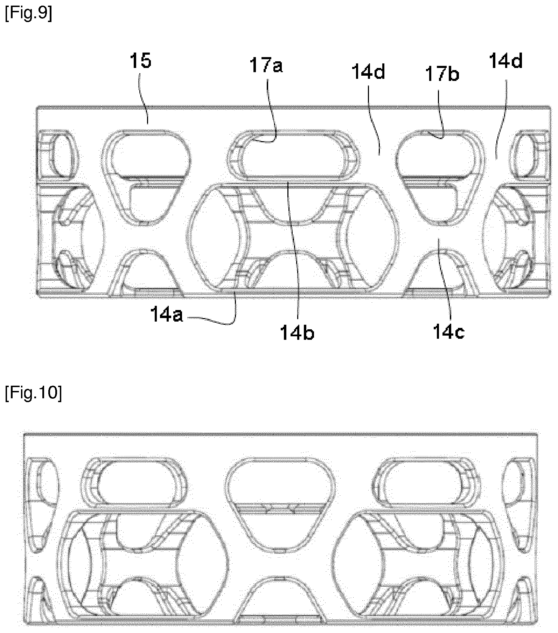

[Fig.9] la figure 9 est une vue de côté ou de dessus du porte-satellites du réducteur de la figure 3,
[Fig. 10] la figure 10 est une autre vue de côté ou de dessus du porte-satellites du réducteur de la figure 3,
[Fig.11] la figure 11 est une vue de face avant du porte-satellites du réducteur de la figure 3,
[Fig.12] la figure 12 est une vue de face arrière du porte-satellites du réducteur de la figure 3,
[Fig.13] la figure 13 est une vue en perspective d'un déflecteur du réducteur de la figure 3.

### Description détaillée de l'invention

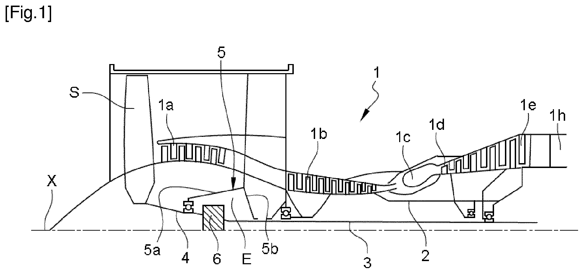

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé à l'arbre BP 3 au moyen d'un réducteur 6. Ce réducteur 6 est généralement de type planétaire ou épicycloïdal.

Bien que la description qui suit concerne un réducteur du type planétaire ou épicycloïdal, elle s'applique également à un différentiel mécanique dans lequel les trois composants, que sont le porte-satellites, la couronne et le solaire, sont mobiles en rotation, la vitesse de rotation de l'un de ces composants dépendant notamment de la différence de vitesses des deux autres composants.

Le réducteur 6 est positionné dans la partie avant de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

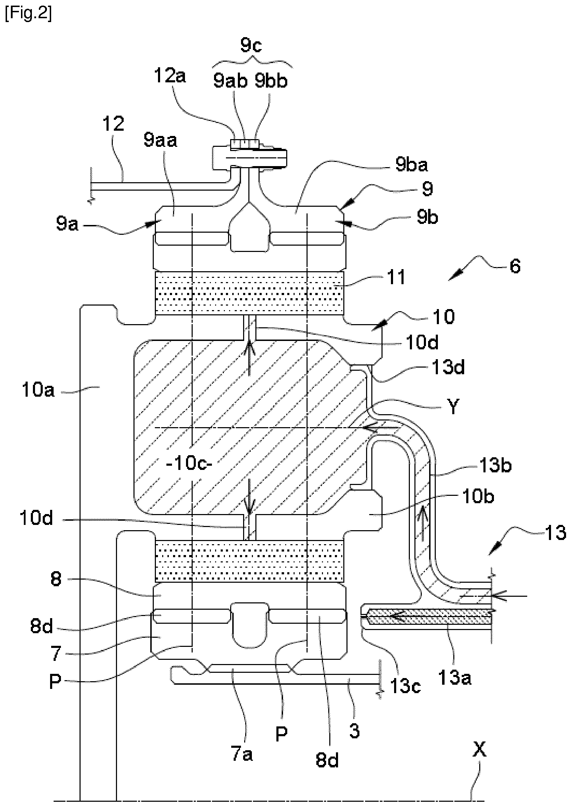

La figure 2 montre un réducteur 6 qui peut prendre la forme de différentes architectures selon si certaines pièces sont fixes ou en rotation. En entrée, le réducteur 6 est relié à l'arbre BP 3, par exemple par l'intermédiaire de cannelures internes 7a. Ainsi l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenus par un châssis appelé porte-satellites 10. Chaque satellite 8 tourne autour de son propre axe Y, et engrène avec la couronne 9.

En sortie nous avons:
- Dans une configuration épicycloïdale, l'ensemble des satellites 8 entraine en rotation le porte-satellite 10 autour de l'axe X de la turbomachine. La couronne est fixée au carter moteur ou stator 5 via un porte-couronne 12 et le porte-satellites 10 est fixé à l'arbre de soufflante 4.
- Dans une configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.

Chaque satellite 8 est monté libre en rotation à l'aide d'un palier 11, par exemple de type roulement ou palier hydrostatique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes 10b et de paliers 11 égal au nombre de satellites. Pour des raisons de fonctionnement, de montage, de fabrication, de contrôle, de réparation ou de rechange les axes 10b et le châssis 10a peuvent être séparés en plusieurs pièces.

Pour les mêmes raisons citées précédemment, la denture d'un réducteur peut être séparée en plusieurs hélices présentant chacun un plan médian P. Dans notre exemple, nous détaillons le fonctionnement d'un réducteur à plusieurs hélices avec une couronne séparée en deux demi-couronnes:
- Une demi-couronne avant 9a constituée d'une jante 9aa et d'une demi-bride de fixation 9ab. Sur la jante 9aa se trouve l'hélice avant de la denture du réducteur. Cette hélice avant engrène avec celle du satellite 8 qui engrène avec celle du solaire 7.
- Une demi-couronne arrière 9b constituée d'une jante 9ba et d'une demi-bride de fixation 9bb. Sur la jante 9ba se trouve l'hélice arrière de la denture du réducteur. Cette hélice arrière engrène avec celle du satellite 8 qui engrène avec celle du solaire 7.

Si les largeurs d'hélice varient entre le solaire 7, les satellites 8 et la couronne 9 à cause des recouvrements de denture, elles sont toutes centrées sur un plan médian P pour les hélices avant et sur un autre plan médian P pour les hélices arrière. Dans les autres figures, dans le cas d'un roulement à deux rangées de rouleaux, chaque rangée d'éléments roulants est aussi centrée sur deux plans médians.

La demi-bride de fixation 9ab de la couronne avant 9a et la demi-bride de fixation 9bb de la couronne arrière 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans le distributeur 13 par différents moyens qui ne seront pas précisés dans cette vue car ils sont spécifiques à un ou plusieurs types d'architecture. Le distributeur est séparé en 2 parties en général chacune répétée du même nombre de satellite. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier. L'huile circule ensuite à travers l'axe dans une ou des zones tampons 10c pour ensuite ressortir par les orifices 10d afin de lubrifier les paliers des satellites.

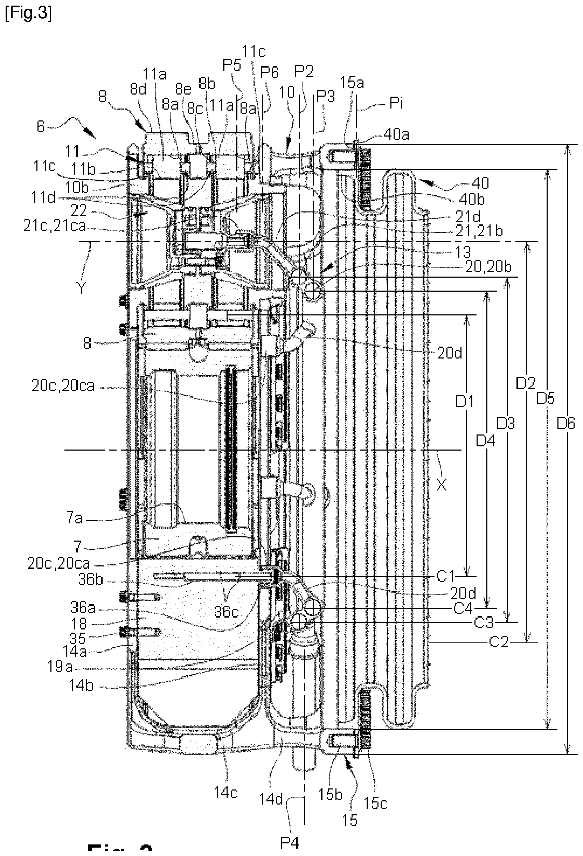

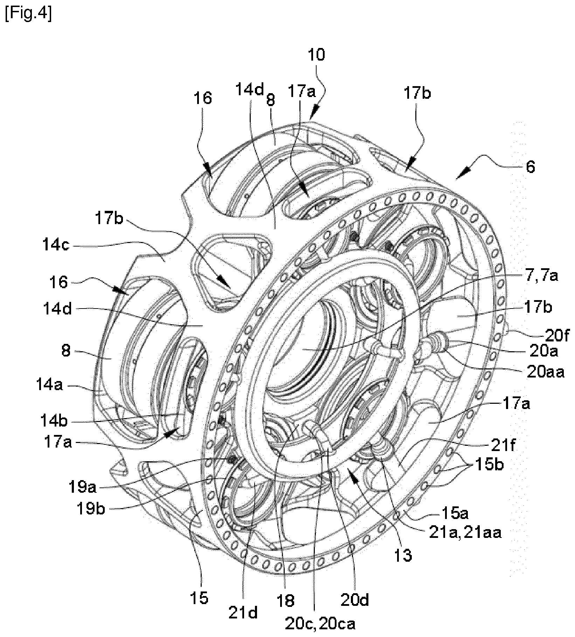

Les figures 3 et 4 représentent un mode de réalisation d'un réducteur 6 selon l'invention.

Le réducteur 6 comprend un porte-satellites 10 monobloc.

La porte-satellites 10 comprend une cage comportant deux parois annulaires radiales 14a, 14b s'étendant autour de l'axe X, ces parois 14a, 14b étant parallèles et étant respectivement une paroi radiale avant 14a et une paroi radiale arrière 14b. Les parois 14a, 14b sont reliées entre elles à leurs périphéries externes par des pontets 14c régulièrement répartis autour de l'axe X. Ces pontets 14c assurent une liaison structurelle entre les parois 14a, 14b.

Chaque pontet 14c comprend deux bras ou barres entrecroisées et présente donc une forme générale de X. Les parois 14a, 14b et les pontets 14c sont formés d'une seule pièce. Ceci permet que le porte-satellites 10 forme un seul ensemble structurel, éliminant de fait les problèmes liés à l'assemblage de plusieurs pièces par l'intermédiaire d'organes de liaison additionnels. Ceci permet notamment d'éviter les problèmes liés au balourd généré par les tolérances d'assemblage, les problèmes de montage ou encore la masse supplémentaire due à la multiplication des pièces.

Les pontets 14c définissent entre eux des premiers espaces 16 qui s'étendent circonférentiellement autour de l'axe X et sont délimitées axialement par les bords périphériques externes des parois 14a, 14b. Les pontets 14c sont au nombre de cinq dans l'exemple représenté et définissent entre eux cinq espaces 16 qui servent au montage des satellites 8 dans le porte-satellites. Les satellites 8 du réducteur sont ainsi au nombre de cinq.

Le porte-satellites 10 comprend en outre un anneau 15 de fixation à un élément de stator de la turbomachine (non représenté). L'anneau 15 s'étend autour de l'axe X, en aval ou en arrière de la paroi arrière 14b, et est relié à cette paroi 14b par des seconds pontets 14d.

Les pontets 14d s'étendent dans la continuité des barres des pontets 14c et sont donc inclinés par rapport à des droites parallèles à l'axe X. L'anneau 15, les parois 14a, 14b et les pontets 14c, 14d sont ici formés d'une seule pièce.

L'anneau 15 comprend une face radiale arrière 15a qui s'étend dans un plan P1 perpendiculaire à l'axe X et sur laquelle débouche une série d'orifices taraudés 15b de réception de vis 15c de fixation du porte-satellites 10 à un organe élastiquement déformable 40 (figure 3).

L'anneau 15 comprend un diamètre interne D5 et un diamètre externe D6. Dans le mode de réalisation représenté. Le diamètre D6 est similaire aux diamètres externes des parois 14a, 14b et des pontets 14c, 14d.

Comme on le voit dans les dessins, l'anneau 15 est écarté axialement de la paroi arrière 14b et les pontets 14d définissent entre eux des seconds espaces 17a, 17b (figure 4).

Les espaces 17a ont une forme générale allongée en direction circonférentielle autour de l'axe X. Ils sont sensiblement alignés axialement avec les espaces 16. Chaque espace 17a est séparé d'un espace 16 par une partie périphérique externe de la paroi 14b.

Les espaces 17b sont sensiblement alignés axialement avec les pontets 14c. Ils ont une forme générale triangulaire ou trapézoïdale qui est due au fait qu'ils communiquent avec les logements créés entre les barres entrecroisées des pontets 14c. Chaque espace 17b n'est ainsi pas séparé de ces logements par une partie périphérique externe de la paroi 14b.

La cage du porte-satellites 10 définit un logement interne de réception du solaire 7 d'axe X, des satellites 8 disposés autour du solaire 7 et engrenés avec lui, ainsi que des déflecteurs 18.

Comme décrit dans ce qui précède en relation avec la figure 2, le solaire 7 comprend des cannelures internes 7a d'accouplement à des cannelures externes complémentaires d'un arbre BP qui n'est pas représenté (figure 3).

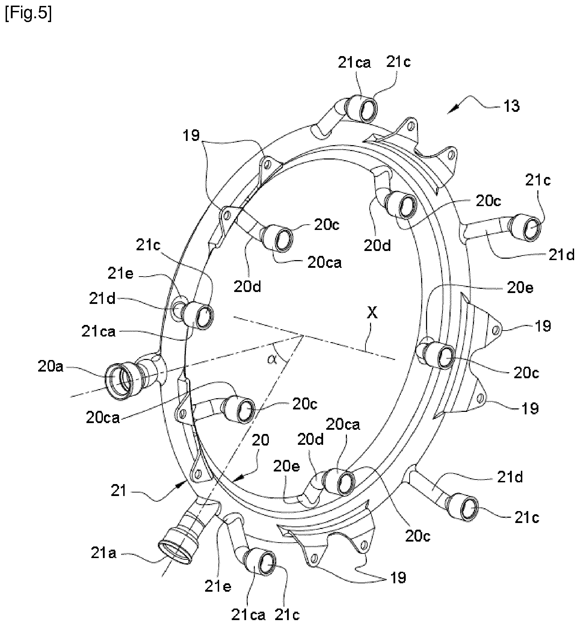

Le réducteur 6 comprend un distributeur 13 d'huile de lubrification qui est mieux visible à la figure 5.

Le distributeur 13 a une forme générale annulaire autour de l'axe X et est formé d'une seule pièce. Il est ici rapporté et fixé sur le porte-satellites 10 et comprend pour cela des pattes 19a de fixation sur le porte-satellites et en particulier sur sa paroi arrière 14b, comme représenté à la figure 4. Les pattes 19a sont régulièrement réparties autour de l'axe X et comprennent des portions appliquées sur la face radiale aval de la paroi 14b et comportant des orifices de passage de vis 19b vissées dans des trous taraudés de la paroi 14b.

Le distributeur 13 comprend des premier et second circuits d'huile 20, 21 indépendants, le premier circuit d'huile 20 comportant une première entrée d'huile 20a reliée par une première chambre annulaire 20b à plusieurs sorties d'huile 20c réparties sur une première circonférence C1 autour de l'axe X, et le second circuit d'huile 21 comporte une seconde entrée d'huile 21a reliée par une seconde chambre annulaire 21b à plusieurs sorties d'huile 21c réparties sur une seconde circonférence C2 autour de l'axe X (figures 3 et 5).

La circonférence C1 a un diamètre D1 et la circonférence C2 a un diamètre D2, D2 étant supérieur à D1.

Le distributeur 13 est diamétralement plus petit que D5 ce qui autorise son montage/démontage à l'intérieur de l'anneau 15.

Le diamètre externe du distributeur 13 correspond à l'extrémité des entrées 20a, 21a (qui se terminent généralement à la même circonférence).

Les chambres 20b, 21b sont formées par deux anneaux tubulaires coaxiaux et intimement liés, c'est-à-dire que leurs parois tubulaires sont fusionnées. Les chambres ont en section axiale une forme générale circulaire et les sections de passage des chambres sont sensiblement constantes sur toute leur étendue circonférentielle et sensiblement identiques l'une à l'autre.

La première chambre 20b s'étend sensiblement sur une circonférence C4 de diamètre D4 compris entre D1 et D2. La seconde chambre 21b s'étend sensiblement sur une autre circonférence C3 de diamètre D3 compris entre D1 et D2. D3 est supérieur à D4. Les circonférences C4 et C3 sont centrées sur l'axe X. D1 est inférieur à D4 et D3 alors que D2 est supérieur à D4 et D3. Il est avantageux que C4 et C3 soient situées sensiblement à mi-distance (radiale) de C1 et C2, car cela rigidifie le distributeur 13.

La chambre 21b de plus grand diamètre est située en avant de celle 20b de plus petit diamètre. Comme on le voit à la figure 3, les chambres s'étendant dans des plans P2, P3 perpendiculaires à l'axe X.

Les entrées 20a, 21a sont orientées en direction radiale par rapport à l'axe X. Elles sont de préférence situées dans un même plan P4 perpendiculaire à l'axe X et sont inclinées l'une par rapport à l'autre dans ce plan P4 d'un angle α déterminé (figure 5). Cet angle α est par exemple compris entre 30 et 60°. Comme on le voit à la figure 4, les entrées 20a, 21a sont orientées respectivement selon des directions qui traversent chacune un des espace 17a, 17b précités.

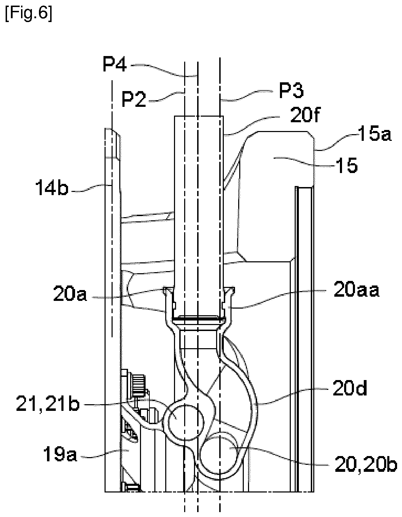

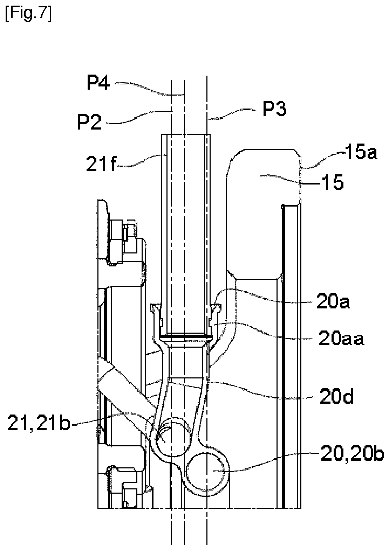

Les plans P2, P3 et P4 sont situés entre la paroi 14b et l'anneau 15 (figures 6 et 7).

Le distributeur 13 est avantageusement configuré pour être raccordé fluidiquement, au niveau de ses entrées et de ces sorties, par des emmanchements du type mâle-femelle, c'est-à-dire par des raccords nécessitant seulement un emboîtement par translation axiale d'un raccord mâle dans un raccord femelle. Même si un raccord est présenté dans ce qui suit comme mâle et destiné à coopérer avec un raccord femelle, il peut en variante être remplacé par un raccord femelle destiné donc à coopérer avec un raccord mâle, et inversement.

En ce qui concerne les entrées 20a, 21a, elles comprennent chacune un raccord femelle 20aa, 21aa dans l'exemple représenté qui est destiné à recevoir le raccord mâle d'un tuyau 20f, 21f d'alimentation (figures 4, 6 et 7). Les tuyaux 20f, 21f sont rectilignes et traversent les espace 17a, 17b précités et sont destinés à traverser également des bras tubulaires d'un carter intermédiaire de la turbomachine 1, en vue du raccordement du distributeur 13 à une source d'huile de lubrification. L'étanchéité des raccords mâle-femelle peut être assurée par des joints toriques ou analogues.

Dans l'exemple représenté, le tuyau 20f traverse un espace 17b et le tuyau 21f traverse un espace 17a qui est situé à côté de l'espace 17b traversé par le tuyau 20f (figure 4).

Les raccords femelles 20aa, 21aa des entrées 20a, 21a sont reliés aux chambres respectives par des conduites 20d, 21d. Le raccord 20aa de l'entrée 20a est relié à la chambre 20b la plus éloignée du plan P4 par une conduite 20ab qui a une forme générale de S (figure 6). Le raccord 21aa de l'entrée 21a est relié à la chambre 21b la plus proche du plan P4 par une conduite 21ab qui a une forme rectiligne ou légèrement coudé (figure 7).

En ce qui concerne les sorties 20c, elles comprennent chacune un raccord femelle 20ca dans l'exemple représenté qui est destiné à recevoir le raccord mâle d'un des déflecteurs 18. Ces sorties 20c sont orientées axialement, toutes dans la même direction ici vers l'avant. Les raccords 20ca de ces sorties sont reliées à la chambre 20b par des canaux 20d sensiblement en L ou V (figure 5).

En ce qui concerne les sorties 21c, elles comprennent chacune un raccord femelle 21ca dans l'exemple représenté qui est destiné à recevoir le raccord mâle d'un de noyau de lubrification et de refroidissement 22 visible à la figure 3. Ces sorties 21c sont orientées axialement, toutes dans la même direction ici vers l'avant. Les raccords 21ca de ces sorties sont reliées à la chambre 21b par des conduits 21d sensiblement en L ou V.

Comme on le voit à la figure 3, les longueurs ou dimensions axiales des canaux 20d et des conduits 21d sont différentes, les sorties 21c étant situées dans un plan P5 perpendiculaire à l'axe X qui est plus en avant que celui P6 qui passe par les sorties 20c. Les plans P5 et P6 passent par la cage du porte-satellites 10.

Enfin, comme on le voit à la figure 5, les canaux 20d sont reliés à l'anneau formant la chambre 20b par des piquages 20e situés sur la périphérie interne de cet anneau, alors que les conduits 21d sont reliés à l'anneau formant la chambre 21b par des piquages 21e situés sur la périphérie externe de cet anneau (figure 5).

Comme évoqué dans ce qui précède, les sorties 21c du distributeur 13 sont raccordées à des noyaux 22. Les noyaux 22 ont pour fonction de lubrifier et de refroidir les axes 10b des satellites 8 qui sont ici centrés et guidés par les paliers 11 à rouleaux 11a.

Dans les exemples de réalisation représentés, chaque axe 10b est guidé par un palier 11 à double roulement, c'est-à-dire à double rangée de rouleaux 11a. Les deux rangées s'étendent autour d'un même axe qui est confondu avec celui, noté Y, de l'axe 10b du satellite 8.

Classiquement, les rouleaux sont guidés dans des pistes définies par des bagues interne et externe. Dans les exemples représentés, une particularité est liée au fait que les bagues internes de guidage des rouleaux 11a sont intégrées à l'axe 10b. La périphérie externe de l'axe 10b comprend ainsi des pistes cylindriques 11b de roulement des rouleaux 11a, chaque piste 11b étant délimitée axialement par des nervures annulaires 11c qui servent elles au guidage de cages 11d de maintien des rouleaux 11a. Par ailleurs, la figure 3 permet de voir que les bagues externes sont intégrées à la périphérie interne des satellites 8. La périphérie interne des satellites 8 comprend ainsi des pistes cylindriques 8a de roulement des rouleaux 11a, les pistes 8a étant séparées l'une de l'autre par une rainure annulaire 8b débouchant radialement vers l'intérieur et au fond de laquelle sont formées des perçages radiaux 8c de passage d'huile.

La périphérie externe de chaque satellite 8 comprend une denture 8d à double hélice, c'est-à-dire deux hélices coaxiales et adjacentes qui sont ici séparées l'une de l'autre par une rainure annulaire 8e débouchant radialement vers l'extérieur et au fond de laquelle débouchent les perçages 8c.

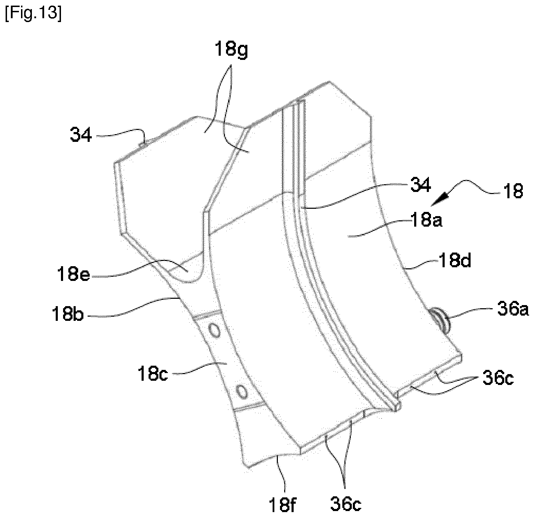

Comme évoqué dans ce qui précède, les sorties 20c du distributeur 13 sont raccordées aux déflecteurs 18. Les déflecteurs 18 sont notamment visibles aux figures 3, 4 et 13. Le réducteur 6 comprend plusieurs déflecteurs 18 qui sont logés dans le porte-satellites 10 et sont chacun disposés entre deux satellites 8 adjacents. Le nombre de déflecteurs 18 du réducteur 6 est donc égal au nombre de satellites 8 de ce réducteur.

La première fonction d'un déflecteur 18 est de guider l'huile de lubrification des dentures des satellites 8 et d'éviter la recirculation d'huile entre satellites, d'où la notion de « déflecteur inter-satellites ». Les déflecteurs 18 sont ainsi conformés pour épouser la forme périphérique des satellites 8.

En plus de s'étendre entre deux satellites 8 adjacents, chaque déflecteur 18 est situé entre le solaire 7 d'une part, situé radialement à l'intérieur, et un pontet 14c, d'autre part, situé radialement à l'extérieur.

Chaque déflecteur 18 comporte un bloc comprenant une première surface latérale 18a qui est cylindrique et concave, et une seconde surface latérale 18b, opposée à la première surface 18a, qui est cylindrique et concave. Les rayons de courbure des surfaces 18a, 18b d'un déflecteur 18 sont similaires et mesurés depuis des axes qui sont parallèles et confondus avec les axes Y des satellites 8 entre lesquels ce déflecteur est monté.

Chacune des première et seconde surfaces 18a, 18b comporte une languette en saillie 34 qui a une forme générale allongée autour de l'axe de révolution de la surface considérée et dont la périphérie interne est incurvée concave. Les languettes 34 d'un déflecteur 18 s'étendent sensiblement dans un même plan perpendiculaire à l'axe X et sont de préférence situées au milieu des surfaces 18a, 18b respectives (en direction axiale).

Dans l'exemple représenté, les extrémités longitudinales des languettes 34 traversent des plans passant respectivement par les faces radialement externe 18e et interne 18f du déflecteur 18, et sont ainsi en saillie dans le but notamment de rallonger la longueur des languettes et donc la dimension circonférentielle de guidage de l'huile autour des satellites 8.

Par ailleurs, dans l'exemple représenté, au-delà de la face 18e, les languettes 34 sont supportées par des ailettes 18g en saillie de prolongement des surfaces 18a, 18b.

Le bloc de chaque déflecteur 18 comprend en outre une face plane avant 18c, qui est sensiblement radiale lorsque le déflecteur est monté dans le porte-satellites 10 du réducteur, et une face plane arrière 18d, qui est également sensiblement radiale. La face plane supérieure ou radialement externe 18e du bloc est destinée à être orientée du côté du couple de pontets 14c, 14d, et sa face inférieure ou radialement interne 18f est destinée à être orientée du côté du solaire 7. Cette face 18f est cylindrique et concave et a un rayon de courbure mesuré depuis un axe qui est confondu avec l'axe X du solaire. Cette face 18f a donc pour fonction de guider l'huile de lubrification de la denture du solaire.

Les déflecteurs 18 s'étendent entre les parois radiales 14a, 14b et ont leurs faces 18a, 18b qui sont en appui sur les faces internes en regard de ces parois 14a, 14b. Les déflecteurs 18 sont fixés au porte-satellites 10 par des vis 35 par exemple. Chaque bloc peut comporter, par exemple sur sa face avant 18a, des trous taraudés de réception de vis 35 de fixation du déflecteur à la paroi avant 14a (figure 3). Une configuration identique sur la paroi 14b est aussi possible.

En position montée, les languettes 34 de chaque déflecteur 18 s'étendent au milieu et à l'intérieur des rainures inter-hélices 8e des deux satellites 8 entre lesquels ce déflecteur est monté. Un jeu prédéterminé est laissé entre le sommet de chaque languette 34 et le fond en regard de la rainure 8e dans laquelle est insérée la languette. Les languettes 34 ont pour fonction de limiter le passage d'huile d'une denture à une autre denture d'un même satellite 8.

Chaque déflecteur 18 comprend un circuit de lubrification intégré, qui comprend une entrée d'huile 36a reliée par des perçages 36b à au moins une sortie d'huile 36c (figure 3). Dans l'exemple représenté, l'entrée d'huile 36a est située sur la face arrière 18d et comprend une tubulure destinée à former un raccord mâle et à coopérer par emmanchement mâle-femelle avec une sortie 20c du distributeur 13 décrit dans ce qui précède. Même si un raccord est présenté dans ce qui suit comme mâle et destiné à coopérer avec un raccord femelle, il peut en variante être remplacé par un raccord femelle destiné donc à coopérer avec un raccord mâle, et inversement (figure 3).

En variante, les déflecteurs 18 pourraient être formés d'une seule pièce avec la cage du porte-satellites 10.

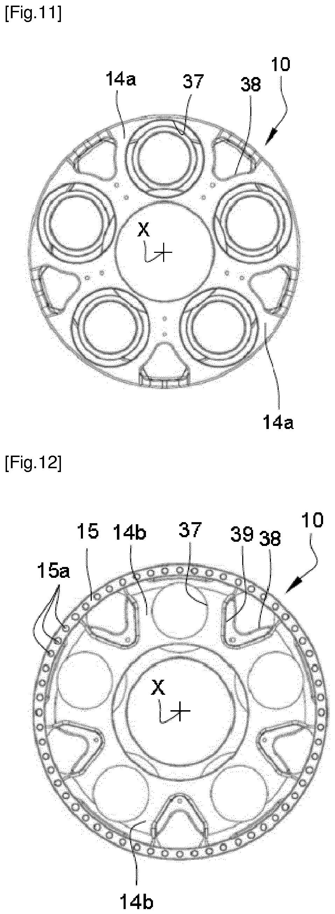

Comme illustré sur les figures 11 et 12 notamment, les parois 14a, 14b du porte-satellites 10 comportent chacune des trous 37 servant chacun au montage d'une extrémité d'un satellite 8. Ces trous 37 peuvent recevoir des sièges de support des satellites 8 de façon rotative.

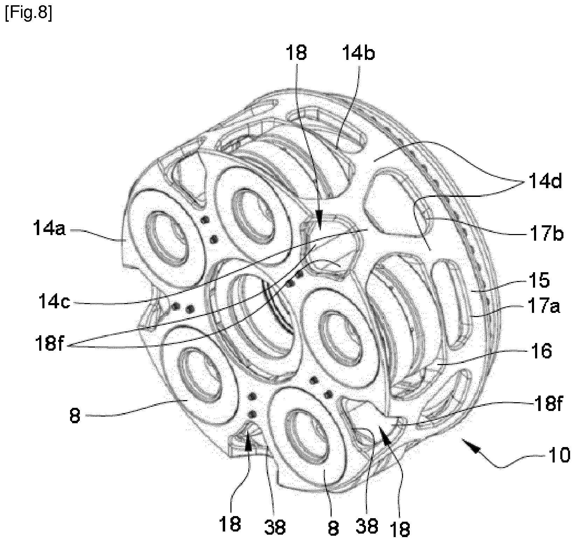

Chacune des parois 14a, 14b comprend, entre deux trous 37 adjacents, une encoches 38, 39. Dans l'exemple représenté, chacune de ces encoches 38, 39 est alignée avec un pontet 14c selon un plan passant par l'axe X. Chaque encoche 38 est située à la périphérie externe de la paroi 14a, entre les barres correspondantes de chaque pontet 14c, et présente une forme générale en U ou V dont l'ouverture est orientée radialement vers l'extérieur par rapport à l'axe X et communique avec le logement formé entre les barres de ce pontet 14c (figures 8 et 11). Chaque encoche 39 est située à la périphérie externe de la paroi 14b et présente une forme générale en U ou V dont l'ouverture est orientée radialement vers l'extérieur par rapport à l'axe X et communique avec le logement formé entre les barres de ce pontet 14c ainsi qu'avec un des espaces 17b précités (figures 8 et 12).

Comme on le voit à la figure 8 notamment, les ailettes 18f des déflecteurs 18 suivent la forme générale en U ou V des encoches 38, 39.

En ce qui concerne l'organe élastique 40, dans le mode de réalisation de la figure 3, celui-ci a une forme générale de soufflet pour lui conférer une capacité de déformation élastique en direction axiale, radiale et en torsion par exemple.

L'organe 40 a une forme générale annulaire autour de l'axe X et comprend une extrémité axiale, ici avant, fixée à l'anneau 15 et une extrémité axiale opposée, ici arrière, non visible de fixation à un élément de stator de la turbomachine. L'extrémité avant de l'organe 40 comprend une paroi radiale 40a appliquée axialement contre la face 15a et comportant des orifices traversants de passage des vis 15c, et une paroi cylindrique 40b de centrage coopérant avec une surface cylindrique interne de l'anneau 15. Cette surface cylindrique définit le diamètre D5.

## Revendications

1. Porte-satellites (10) fixe pour un réducteur de vitesse (6), ce porte-satellites comportant une cage annulaire s'étendant autour d'un axe X et comprenant deux parois annulaires radiales (14a, 14b) s'étendant autour de l'axe X et reliées à leur périphérie externe par des premiers pontets (14c), lesdites parois radiales étant destinées à être agencées en regard de satellites (8) du réducteur, et lesdits premiers pontets définissant entre eux des premiers espaces (16) de montage de ces satellites, où le porte-satellites comprend en outre un anneau de fixation (15) qui s'étend autour de l'axe X et est relié à l'une desdites parois par des seconds pontets (14d), lesdits seconds pontets définissant entre eux des seconds espaces (17a, 17b), distincts des premiers espaces (16), et dont au moins certains sont destinés à être traversés par des tuyaux (20f, 21f) de lubrification du réducteur, **caractérisé en ce que** le porte-satellites est monobloc et **en ce que** certains desdits seconds espaces (17b) sont alignés axialement avec lesdits premiers pontets (14c) et ont chacun une forme générale triangulaire ou trapézoïdale.

2. Porte-satellites (10) selon la revendication 1, dans lequel les premiers pontets (14c) ont une forme générale en X et les seconds pontets (14d) s'étendent dans la continuité des premiers pontets.

3. Porte-satellites (10) selon la revendication 1 ou 2, dans lequel l'anneau de fixation (15) a un diamètre externe (D6) identique à celui des parois radiales (14a, 14b).

4. Porte-satellites (10) selon l'une des revendications précédentes, dans lequel l'anneau de fixation (15) comprend une face radiale (15a) sur laquelle débouche une série de moyens de fixation, tels que des orifices taraudés (15b).

5. Porte-satellites (10) selon l'une des revendications précédentes, dans lequel certains desdits seconds espaces (17a) sont alignés axialement avec lesdits premiers espaces (16) et ont chacun une forme générale allongée en direction circonférentielle autour de l'axe X.

6. Ensemble comportant un porte-satellites (10) selon l'une des revendications précédentes, et au moins l'un des organes suivants :
- un distributeur (13) d'huile de lubrification, ce distributeur ayant une forme générale annulaire autour de l'axe X et étant monté sur le porte-satellites à l'intérieur dudit anneau (15), ce distributeur comportant au moins un circuit d'huile comportant une entrée d'huile (20a) reliée à un tuyau d'alimentation (20f) s'étendant en direction radiale et traversant l'un desdits seconds espaces (17b), et
- un organe (40) élastiquement déformable, cet organe (40) ayant une forme générale annulaire autour de l'axe X et comportant une extrémité axiale fixée audit anneau (15).

7. Ensemble selon la revendication précédente, dans lequel le distributeur (13) comprend deux circuits d'huile indépendants, un premier circuit d'huile (20) comportant une première entrée d'huile (20a) reliée par un premier tuyau d'alimentation (20f) traversant l'un desdits seconds espaces (17b), et un second circuit d'huile (21) comportant une seconde entrée d'huile (21a) reliée par un second tuyau d'alimentation (21f) traversant un autre desdits seconds espaces (17a).

8. Ensemble selon la revendication précédente, le porte-satellites étant tel que défini à la revendication 5, dans lequel le premier tuyau (20a) traverse un second espace (17b) de forme générale triangulaire ou trapézoïdale et le second tuyau (21f) traverse un second espace (17a) de forme allongée en direction circonférentielle.

9. Réducteur de vitesse (6), comportant un porte-satellites (10) selon l'une des revendications 1 à 5 ou un ensemble selon l'une des revendications 6 à 8.

## Patentansprüche

1. Fester Planetenträger (10) für ein Untersetzungsgetriebe (6), wobei dieser Planetenträger einen ringförmigen Käfig umfasst, der sich um eine Achse X erstreckt und zwei radiale ringförmige Wände (14a, 14b) umfasst, die sich um die Achse X erstrecken und an ihrem Außenumfang über erste Stege (14c) verbunden sind, wobei die radialen Wände dazu bestimmt sind, Planetenrädern (8) des Untersetzungsgetriebes zugewandt angeordnet zu werden, und die ersten Stege zwischen sich erste Räume (16) zur Anbringung dieser Planetenräder definieren, wobei der Planetenträger weiter einen Befestigungsring (15) umfasst, der sich um die Achse X erstreckt und über zweite Stege (14d) mit einer der Wände verbunden ist, wobei die zweiten Stege zwischen sich zweite Räume (17a, 17b) definieren, die von den ersten Räumen (16) getrennt sind, und von denen mindestens einige dazu bestimmt sind, von Rohren (20f, 21f) zur Schmierung des Untersetzungsgetriebes durchquert zu werden, **dadurch gekennzeichnet, dass** der Planetenträger einstückig ist und dadurch, dass einige der zweiten Räume (17b) axial mit den ersten Stegen (14c) ausgerichtet sind und jeweils eine allgemein dreieckige oder trapezförmige Form aufweisen.

2. Planetenträger (10) nach Anspruch 1, wobei die ersten Stege (14c) eine allgemein X-förmige Form aufweisen und die zweiten Stege (14d) sich in Fortsetzung der ersten Stege erstrecken.

3. Planetenträger (10) nach Anspruch 1 oder 2, wobei der Befestigungsring (15) einen Außendurchmesser (D6) aufweist, der mit dem der radialen Wände (14a, 14b) identisch ist.

4. Planetenträger (10) nach einem der vorstehenden Ansprüche, wobei der Befestigungsring (15) eine radiale Fläche (15a) umfasst, an der eine Reihe von Befestigungsmitteln, wie etwa Gewindeöffnungen (15b), münden.

5. Planetenträger (10) nach einem der vorstehenden Ansprüche, wobei einige der zweiten Räume (17a) axial mit den ersten Räumen (16) ausgerichtet sind und jeweils eine allgemein in Umfangsrichtung um die Achse X längliche Form aufweisen.

6. Baugruppe, die einen Planetenträger (10) nach einem der vorstehenden Ansprüche und mindestens eines der folgenden Organe umfasst:
- einen Schmierölverteiler (13), wobei dieser Verteiler eine allgemein ringförmige Form um die Achse X aufweist und innerhalb des Rings (15) am Planetenträger angebracht ist, wobei dieser Verteiler mindestens einen Ölkreislauf umfasst, der einen Öleinlass (20a) umfasst, welcher mit einem Zuführrohr (20f) verbunden ist, das sich in radialer Richtung erstreckt und einen der zweiten Räume (17b) durchquert, und
- ein elastisch verformbares Organ (40), wobei dieses Organ (40) eine allgemein ringförmige Form um die Achse X aufweist und ein axiales Ende umfasst, das an dem Ring (15) befestigt ist.

7. Baugruppe nach dem vorstehenden Anspruch, wobei der Verteiler (13) zwei unabhängige Ölkreisläufe umfasst, wobei ein erster Ölkreislauf (20) einen ersten Öleinlass (20a) umfasst, der über ein erstes Zuführrohr (20f), das einen der zweiten Räume (17b) durchquert, verbunden ist, und wobei ein zweiter Ölkreislauf (21) einen zweiten Öleinlass (21a) umfasst, der über ein zweites Zuführrohr (21f), das einen anderen der zweiten Räume (17a) durchquert, verbunden ist.

8. Baugruppe nach dem vorstehenden Anspruch, wobei der Planetenträger wie in Anspruch 5 definiert ist, wobei das erste Rohr (20a) einen zweiten Raum (17b) von allgemein dreieckiger oder trapezförmiger Form durchquert und das zweite Rohr (21f) einen zweiten Raum (17a) von in Umfangsrichtung länglicher Form durchquert.

9. Untersetzungsgetriebe (6), das einen Planetenträger (10) nach einem der Ansprüche 1 bis 5 oder eine Baugruppe nach einem der Ansprüche 6 bis 8 umfasst.

## Claims

1. Planet-carrier (10) for a reduction gear (6), said planet-carrier comprising an annular cage extending about an axis X and comprising two radial annular walls (14a, 14b) extending about the axis X and connected at their outer periphery by means of first fins (14c), said radial walls being intended to be arranged opposite the planet gears (8) of the reduction gear, and said first fins defining between them first assembly spaces (16) for these planet gears, the planet-carrier (10) further comprises an attachment ring (15) that extends about the axis X and is connected to one of said walls by means of second fins (14d), said second fins defining between them second spaces (17a, 17b), separate from the first spaces (16), and of which at least some are intended to be intersected by lubrication pipes (20f, 21f) of the reduction gear, **characterised in that** the planet-carrier is made of a single block and **in that** some of said second spaces (17b) are axially aligned with said first fins (14c) and each has a generally triangular or trapezoidal shape.

2. Planet-carrier (10) according to claim 1, wherein the first fins (14c) are generally X-shaped and the second fins (14d) extend in the continuity of the first fins.

3. Planet-carrier (10) according to claim 1 or 2, wherein the attachment ring (15) has an outer diameter (D6) that is identical or near-identical to that of the radial walls (14a, 14b).

4. Planet-carrier (10) according to one of the preceding claims, wherein the attachment ring (15) comprises a radial face (15a) on which opens a series of attachment means, such as tapped orifices (15b).

5. Planet-carrier (10) according to one of the preceding claims, wherein some of said second spaces (17a) are axially aligned with said first spaces (16) and each has a generally elongate shape in a circumferential direction about the axis X.

6. Assembly comprising a planet-carrier (10) according to one of the preceding claims, and at least one of the following members:
- a distributor (13) of lubricating oil, the distributor having a generally annular shape about the axis X and being mounted on the planet-carrier inside said ring (15), the distributor comprising at least an oil circuit comprising an oil inlet (20a) connected to a supply pipe (20f) extending in a radial direction and intersecting with one of said second spaces (17b), and
- an elastically deformable member (40), said member (40) having a generally annular shape about the axis X and comprising an axial end secured to said ring (15).

7. Assembly according to the preceding claim, wherein the distributor (13) comprises two independent oil circuits, a first oil circuit (20) comprising a first oil inlet (20a) connected by a first supply pipe (20f) intersecting with one of said second spaces (17b), and a second oil circuit (21) comprising a second oil inlet (21a) connected by a second supply pipe (21f) intersecting with another of said second spaces (17a).

8. Assembly according to the preceding claim, the planet-carrier being as defined in claim 5, wherein the first pipe (20a) intersects with a second space (17b) with a generally triangular or trapezoidal shape and the second pipe (21f) intersects with a second space (17a) with an elongate shape in the circumferential direction.

9. Reduction gear (6), in particular for a turbine engine of an aircraft, comprising a planet-carrier (10) according to one of claims 1 to 5, or an assembly according to one of claims 6 to 8.
